# EUROPEAN PATENT SPECIFICATION

(11) **EP 3 796 125 B1**
(45) Date of publication and mention of the grant of the patent: **02.04.2025**
(21) Application number: 20201473.4
(22) Date of filing: 19.02.2018
(51) Int. Cl.: G05G 1/10, G05G 5/06, G06F 3/0362, F24C 3/12, H01H 3/08, H01H 3/02, G05G 1/08, F16D 3/18, F24C 7/08, G05G 5/05, A47J 31/44

(54) **KNOB ASSEMBLY WITH DISPLAY DEVICE AND COOKING APPARATUS HAVING KNOB ASSEMBLY**
KNOPFANORDNUNG MIT ANZEIGEVORRICHTUNG UND KOCHVORRICHTUNG MIT KNOPFANORDNUNG
ENSEMBLE BOUTON COMPRENANT UN DISPOSITIF D'AFFICHAGE ET APPAREIL DE CUISSON COMPORTANT UN ENSEMBLE BOUTON

(30) Priority: 17.02.2017 KR 20170021879; 17.02.2017 KR 20170021878; 22.02.2017 KR 20170023774; 24.07.2017 KR 20170093734; 26.07.2017 KR 20170094806; 06.12.2017 KR 20170167073
(43) Date of publication of application: 24.03.2021
(62) Divisional of application: 18157306.4
(73) Proprietor: LG Electronics Inc., Yeongdeungpo-gu Seoul 07336 (KR)
(72) Inventor: Ha, Yeonsik, 08592 Seoul (KR); Cho, Seong Sik, 08592 Seoul (KR)
(74) Representative: Ter Meer Steinmeister & Partner

(56) References cited:
- EP-A1- 3 492 815
- EP-B1- 1 962 167
- DE-A1- 102011 007 471
- US-A- 3 621 158
- US-A1- 2004 070 574
- US-A1- 2014 260 775
- US-A1- 2016 333 991
- US-B2- 8 718 462

## Description

### 1. Technical field

A cooking apparatus having a knob assembly are disclosed herein.

### 2. Background

A cooking apparatus is a kind of home appliance that cooks food or other items (hereinafter "food") and may be installed or provided in a kitchen space. Such cooking apparatuses may be classified into various categories according to heat source, form or shape thereof, and type of fuel used in the cooking apparatus. The cooking apparatus may be classified as an open-type cooking apparatus and/or a closed-type cooking apparatus according to a space in which food is placed. The closed-type cooking apparatus may include an oven, or a microwave oven, for example, and the open-type cooking apparatus may include a cooktop, or a hob, for example.

The closed-type cooking apparatus may be a cooking apparatus configured to enclose a space in which food may be placed and may heat the enclosed space to cook the food. The open-type cooking apparatus may be a cooking apparatus in which food or a vessel containing food may be placed in an open space and may be configured to heat the food or the vessel to cook the food.

The closed-type cooking apparatus may be provided with a cooking chamber, in which the food may be placed and which may be a space which is enclosed when the food is cooked. Food may be cooked in the cooking chamber. A heat source may be provided in a space inside or outside of the cooking chamber to heat the cooking chamber.

A composite cooking apparatus may be provided in which a closed-type cooking apparatus and an open-type cooking apparatus may be installed and a plurality of heat sources may be combined to simultaneously cook a plurality of foods. In the composite cooking apparatus, the open-type cooking apparatus may be located above the closed-type cooking apparatus. A plurality of heaters or burners may be installed at or provided on the open-type cooking apparatus so that the open-type cooking apparatus may be able to simultaneously cook a plurality of foods.

A user may use the closed-type cooking apparatus when cooking food, such as, for example, barbecued food or baked goods or grilled food, and may use the open-type cooking apparatus which is exposed above the closed-type cooking apparatus when cooking food which may be accommodated and heated in a vessel or container. The open-type cooking apparatus may be a gas range, and such an open-type cooking apparatus may cook food using a flame generated when a gas burns.

A variety of methods may be provided to enable a user to adjust a strength of a flame of such an open-type cooking apparatus. A method of adjusting a power level by using a knob, which may rotate around a predetermined rotational shaft, to adjust a rotational amount of the knob may be widely used. The knob may be connected to a valve that controls a flow rate of a gas to mechanically control opening and closing amounts of the valve. A method of electronically measuring a rotational amount of the knob and electronically controlling the opening and closing amounts of the valve based on the measured result may also be applied to the knob.

A cooking apparatus or composite cooking apparatus including an oven may be provided with a display or module which may display a timer time, and an operating state, for example. In an oven required to cook food for a long time, a timer function may be necessary, a dial-type timer may be employed in the oven, and a structure capable of displaying status information of the cooking apparatus through a separate display may be provided.

Even though the cooking apparatus is provided with the same cooktop, the display may not be necessary when only a gas range is provided at the cooking apparatus, but in the composite cooking apparatus, the display may be needed so as to display various information. However, information displayed by individual products may be different, and designs of a screen of a display, and a user interface (UI), for example, may be separately developed.

US 2016/333991 A1 presents a control knob for an appliance that includes an outer control ring, a stationary hub, a rotation modulating mechanism coupled to the outer control ring and engaged with an outer surface of the stationary hub, wherein the outer control ring is rotationally operable about the stationary hub at a first rate, an indicial ring positioned around the stationary hub, wherein the indicial ring engages a portion of the rotation modulating mechanism, wherein rotation of the outer control ring at the first rate causes the rotation modulating mechanism to rotate the indicial ring about the stationary hub at a second rate, the second rate being different than the first rate and an encoder shaft positioned within the stationary hub, wherein an inner gearing mechanism extends between an exterior surface of the encoder shaft and one of the outer control ring and the indicial ring.

US 2014/260775 A1 presents a household cooking appliance that includes a cooking module, a control panel, a rotatable control knob, and a dual-encoder ON/OFF selector for the cooking module. The dual-encoder ON/OFF selector includes a rotatable bezel on the control panel. The rotatable bezel controls activation and deactivation of the cooking module. The rotatable bezel includes an opening, wherein the rotatable control knob extends through the opening of the rotatable bezel and is concentrically arranged within the rotatable bezel.

US 3 621 158 A relates to a dual-function switching apparatus intended particularly for controlling the two time bases of a dual time base oscilloscope. This switching apparatus comprises two switch contact assemblies of the wafer type driven in rotation by two coaxial shafts respectively. Each shaft is independently rotated by its own knob, these two knobs also being mounted coaxially one in front of the other. The rear knob has a datum index by which its position can be read on scale markings on the oscilloscope front panel. The front knob also has a datum index used for determining the position of this front knob. But to avoid parallax errors in reading the position of this front datum index on the scale markings, the rear knob is provided with auxiliary indexes which extend from the datum index on the front knob to the scale markings on the panel. When the datum index on the front knob is aligned with any particular auxiliary index on the rear knob, the position of the front knob is read by sighting along that auxiliary index from the front datum index to the scale markings.

US 2004/070574 A1 presents a method and apparatus for an appliance control knob incorporating a microprocessor and a status display built into the control knob housing. The control knob for an appliance comprises a housing, a microprocessor within the housing, and a status display within the housing.

EP 1 962 167 B1 presents a control device with retractable knob for a household device and household device, particularly baking oven. The element has two movable positioning parts, which are provided for adjusting functions and operating conditions, and are movable relative to each other, where the two movable positioning parts are rotatable around a common rotational axis. The two movable positioning parts are arranged in a direction of the rotational axis one behind the other, where the two movable positioning parts are designed in the shape of the cylinder. The two movable positioning parts exhibit same diameter.

US 8 718 462 B2 presents a control unit for generating a control signal that comprises a base part, a control element rotatable about an axis of rotation relative to the base part, a position encoder for detecting an angular position or a change in angular position of the control element relative to the base part, a control device which is adapted generate the control signal in dependence on the detected angular position or change in angular position of the control element and an electronic display device, wherein the control device is adapted to control the electronic display device to show at least one symbol arrangement. The electronic display device has the shape of a cylinder or of a cylinder sector whose axis coincides with the axis of rotation of the control element or extends in parallel thereto.

### SUMMARY

The objects are solved by the features of the independent claim. Preferred embodiments are described by the dependent claims.

According to one embodiment, a cooking apparatus comprising a knob assembly comprises a knob configured to adjust a power level of a power source; and a knob ring configured to surround a periphery of the knob, configured to be rotatable independent of the knob, and provided with a display. The knob may be coupled to an adjustment shaft, e.g. for adjusting a power level of a burner or cooktop.

The knob ring may be moved from an initial position to a second position by an external force. The knob ring may return to the initial position when the external force is released. A knob ring encoder may be configured to detect a manipulation of the knob ring. A knob encoder may be provided and configured to detect a manipulation of the knob. A actuating member may be coupled to the knob ring. A support frame may support an outer circumferential surface of the actuating member. A fixing frame may be coupled to the support frame and configured to prevent the actuating member from escaping from the support frame. A circular plate may be configured to be inserted between the knob ring and a panel of an apparatus on which the knob assembly is provided. A bearing shell may be provided with a cylinder inserted between the actuating member and the support frame. The knob ring may support the adjustment shaft at two or more points thereof. The knob ring may include a knob ring main body configured to form an exterior appearance thereof; a rear surface plate coupled to a rear surface of the knob ring main body and provided with a support hole configured to support the adjustment shaft which passes through the support hole; and a support pipe coupled to the rear surface plate and configured to support the adjustment shaft. The support pipe may include a flange coupled to the rear surface plate; and a tapered pipe formed to extend from the flange and provided with a cap configured to support the adjustment shaft. The display is configured to display a power level and a timer time. The power level displayed on the display is detected and displayed based on a rotational amount of the knob. The timer time displayed on the display is detected and displayed based on manipulation of the knob ring. The display may be coupled to the knob ring main body through a display housing. A finishing cap may be coupled to an outside of the display housing. The finishing cap may be made of a transparent or semitransparent material to allow information displayed on the display to be visible. The display may include a portion for displaying a power level and a portion for displaying a timer time. If the timer time is not set, only the power level may be displayed. If the timer time is set, the power level may be displayed for a first predetermined period of time and then the timer time may be displayed for a second predetermined period of time. The power level may be displayed with a red color and the timer time is displayed with a white color or a blue color.

According to another aspect, a cooking apparatus may be provided, comprising a knob assembly according to any one of the herein described embodiments.

According to another aspect, a knob assembly is provided, comprising: a rotatable knob configured to adjust a power level of a power source; and a knob ring that surrounds a periphery of the knob, configured to be rotatable independent of the knob, and provided with an electronic display that displays the power level and a timer time.

According to another aspect, a cooking apparatus is provided comprising said knob assembly.

According to another aspect, a cooking apparatus is provided, comprising: at least one knob that adjusts a power level of at least one burner; at least one knob ring that surrounds the at least one knob and is rotatable independent of the at least one knob; and a display provided on the at least one knob ring and configured to display information of the cooking apparatus.

The information of the cooking apparatus may include the power level of the at least one burner and a timer time. The display may be an electronic display including different lighting devices with different colors.

### BRIEF DESCRIPTION OF THE DRAWINGS

Embodiments will be described in detail with reference to the following drawings in which like reference numerals refer to like elements, and wherein:
FIG. 1 is a view of a cooking apparatus provided with a separate display;
FIG. 2 is a view of a front surface of a knob assembly according to an embodiment;
FIG. 3 is a side view of a cross section of the knob assembly of FIG. 2;
FIG. 4 is an exploded view of a components of the knob assembly of FIG. 2;
FIG. 5 is a cross-sectional view of the knob assembly of FIG. 2;
FIG. 6 is a view of a rear surface of the knob assembly of FIG. 2;
FIG. 7 and FIG. 8 are views of different manipulation states of a knob ring of the knob assembly of FIG. 2;

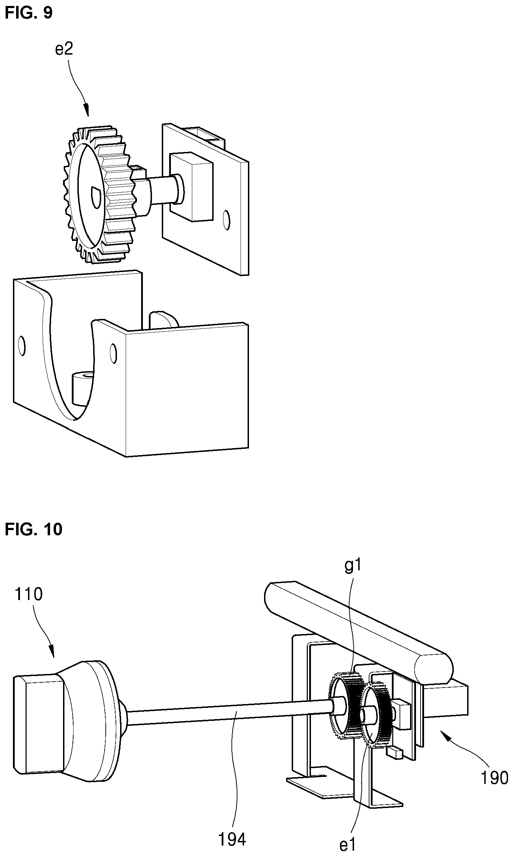

FIG. 9 is a view of a knob ring encoder of the knob assembly of FIG. 2;
FIG. 10 is a view of a knob encoder of the knob assembly of FIG. 2;
FIG. 11 is an exploded perspective view of the knob ring of FIG. 2; and
FIG. 12 is an exploded perspective view of a rear surface of components of the knob ring of FIG. 2.

### DETAILED DESCRIPTION

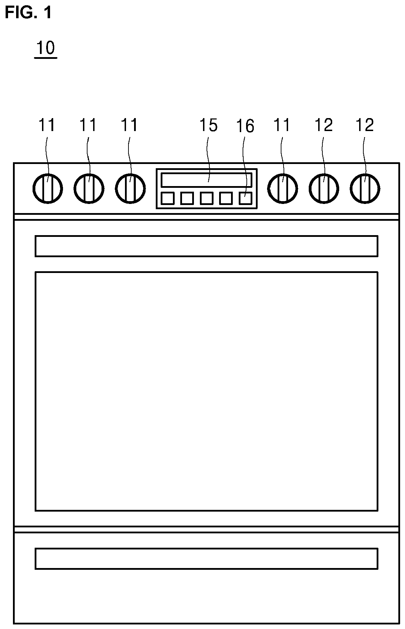

Referring to FIG. 1, a cooking apparatus 10 may be provided with an oven which may include knobs 11 configured to adjust a power level, knobs 12 configured to adjust a timer time, a display or module 15 configured to display a status of the cooking apparatus 10, and switches 16 configured to each perform a separate operation or manipulation, at a front surface of the cooking apparatus 10. As the oven may be required to cook food for a long time, a timer that sets an operating time of the oven may be necessary. For unity of design and convenience of manipulation, a rotary switch may be applied to the knob 11 configured to adjust a power level and the knob 12 configured to adjust a timer time.

The display 15 may display an operation or manipulation state, for example, of the cooking apparatus 10. Information displayed on the display 15 may include an output, for example, a temperature of a burner, the timer time, and a cooking mode of an automatic cooking function, for example. However, if a configuration of a flame hole of the cooking apparatus 10 is changed or a specification of a product is changed, information or a user interface (UI), which may be displayed on the display 15, may be changed, and the display 15 may be separately designed.

As the knob 11 configured to adjust power level and the knob 12 configured to adjust a timer time may have a same or similar shape, the knobs 11 and 12 may be superior in terms of design, but in terms of user convenience, it may be difficult for a user to recognize which knob performs which function. To resolve the above-described problems, a knob assembly may be provided that includes a knob handle configured to adjust a power level of a cooking apparatus and a knob ring configured to adjust a timer time, for example, of the cooking apparatus. A display may be provided at the knob ring so that the knob assembly may be easily used by a user and may have a superior design and an advantage in terms of component sharing.

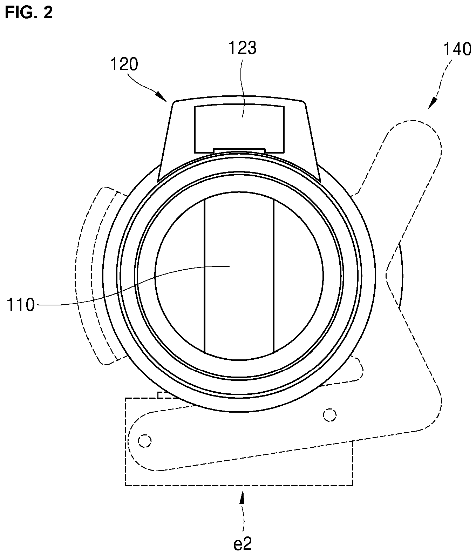

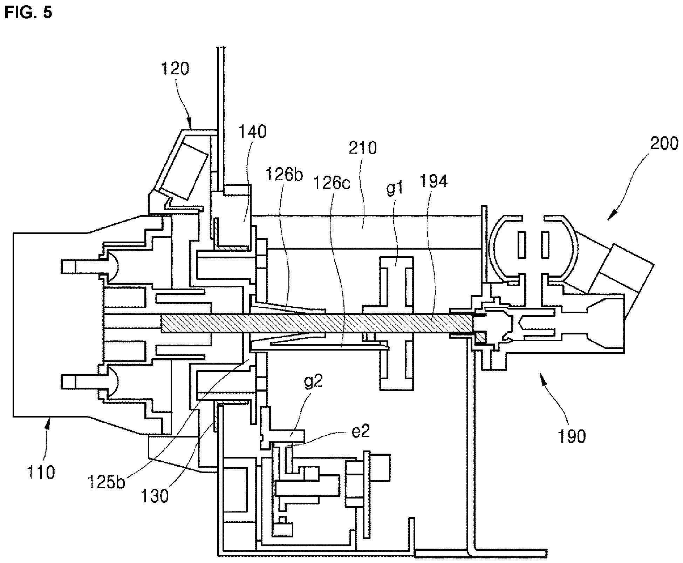

Referring to FIG. 2 through FIG. 5, a knob handle or knob 110 may be connected to an adjustment shaft 194 of a power level adjuster or heat adjuster 190 configured to adjust a power level. The knob handle 110 may include a non-returning rotary switch such that the non-returning rotary switch may not return to an initial position once it is rotated by an external force. The knob handle 110 may be maintained at a position at which a user rotates the knob handle 110, and allow an output of power or flame at a corresponding flame hole according to a rotational angle of the knob handle 110. That is, a position of the knob handle 110 may correspond to how much power is released from a heat source of the cooking apparatus. For example, in a case of a gas burner, the power level adjuster 190 may be a valve, and in the case of a microwave oven or an induction range, the power level adjuster 190 may be an output adjuster, such as a variable resistor, in order to adjust an output thereof.

The knob handle 110 may have a circular shape and may be provided with a protruding handle. The protruding handle may be bar-shaped, but a shape of the handle may be variously modified and embodiments are not limited thereto. The knob handle 110 may be, for example, manufactured of a synthetic resin injection material or may be manufactured by processing a metal material. A material and shape of the knob handle 110 may be variously changed.

A knob ring 120 may be provided at an outer circumferential surface of the knob handle 110 to improve an exterior appearance of a periphery of the knob handle 110. The knob ring 120 may support the knob handle 110 and may finish the exterior appearance of the periphery of the knob handle 110 to improve a quality of the exterior appearance.

The knob ring 120 may confine or restrict a position of the knob handle 110. The power level adjuster 190 may be applied or coupled to the adjustment shaft 194, and if the knob handle 110 is coupled to only the adjustment shaft 194, the knob handle 110 may arbitrarily move in different directions. The knob ring 120 according to embodiments may confine or restrict the position of the knob handle 110 and may allow the knob handle 110 to be maintained at a certain or set position.

The knob ring 120 may include a timer manipulation switch and a display that displays a timer time and power level. The knob ring 120 may rotate independent of the knob handle 110, the timer time may be set through a manipulation or rotation of the knob ring 120, and a display or display 123 may be provided at the knob ring 120 so that the timer time and the power level may be displayed on the display 123.

A knob encoder e1 may be provided to detect a rotational amount of the knob handle 110, and a knob ring encoder e2 may be provided to detect a rotational amount of the knob ring 120. The knob encoder e1 may detect a rotation amount of a gear g1 coupled to the adjustment shaft 194, and the knob ring encoder e2 may sense or detect rotation of a knob ring gear or second gear g2 provided at a actuating member 150.

The knob handle 110 and the knob ring 120 may be provided at or on an outside of a front panel c of the cooking apparatus 10. The knob handle 110 and the knob ring 120 may be provided to pass through a space or hole h in the front panel c of the cooking apparatus 10.The power level, and the timer time, for example, may be displayed on the display 123. The power level displayed on the display 123 may be detected and displayed based on the rotational amount of the knob handle 110, and the timer time displayed on the display 123 may be detected and displayed based on manipulation of the knob ring 120.

The display 123 may include a portion that displays the power level and a portion that displays the timer time, but the power level and the timer time may be selectively displayed on a single display 123. For example, if the timer time is not set, only the power level may be displayed. If the timer time is set, the power level may be displayed for a predetermined period of time and then the timer time may be displayed for a predetermined period of time.

A user may easily verify or recognize whether a displayed number represents the power level or the timer time by differentiating a light color when the power level is displayed from a light color when the timer time is displayed. For example, the power level may be displayed with a red color and the timer time may be displayed with a white color or a blue color. When both the power level and the timer time are displayed, the power level may be displayed for two seconds and then the timer time may be displayed for a next two seconds.

As described above, when both the power level and the timer time are adjusted and displayed through the knob assembly, a separate display may not be necessary at the front panel c. A structure of such a knob assembly may be applied to both an oven range provided with an oven and a cooktop including only a burner, and may have an advantage in that the knob assembly may be used as a component shared by the oven range and the cooktop.

A actuating member 150 may be coupled to a rear surface of the knob ring 120 and may integrally rotate with the knob ring 120. A rotational amount of the actuating member 150 may be the same as the rotational amount of the knob ring 120. By detecting the rotational amount of the actuating member 150, a manipulation of the knob ring 120 may be detected. The knob ring gear g2 may be provided at the actuating member 150.

A support frame 140 may be coupled to the front panel c to support the knob ring 120. The knob handle 110 and the knob ring 120 may each be coupled at aligned positions on the front panel c, and the front panel c may be made of a metal thin plate material, for example. When the hole h is formed at the front panel c and the knob ring 120 directly rotates with and rubs against the hole h, a problem in that the knob ring 120 may be cut or deformed may occur. Therefore, the support frame 140 may be coupled to and aligned with the hole h formed at the front panel c.

The support frame 140 may be provided with a guide recess corresponding to an outer diameter of the actuating member 150 coupled to the knob ring 120. An outer circumferential surface of the actuating member 150 may be supported by the support frame 140 and rotated to a predetermined position. A position of the knob ring 120 may be determined by the support frame 140, and the support frame 140 may be engaged with the front panel c so that the position of the knob ring 120 may be fixed with respect to the front panel c.

The support frame 140 may surround the outer circumferential surface of the actuating member 150 and may support the actuating member 150 to be rotatable around a predetermined shaft. The support frame 140 may be engaged with a guide rod 210 and a burner frame 200 to which the power level adjuster 190 may be fixed. The guide rod 210 may fix or couple the burner frame 200 to the support frame 140, and the support frame 140 may be fixed at a predetermined position with respect to the burner frame 200 via the guide rod 210.

A fixing frame 160 may be engaged with and fixed to the support frame 140 via a fastener, such as a screw, for example, and may prevent the actuating member 150 from moving or escaping from the fixing frame 160 in a rearward direction toward an inside of the cooking apparatus 10. The fixing frame 160 may confine or restrict a rotational range of the actuating member 150 and restrict the actuating member 150 and the knob ring 120 to be rotatable only within a predetermined angle range.

The fixing frame 160 may be formed in a shape which is similar to a bow tie such that an angle between portions corresponding to wings of the bow tie may restrict the actuating member 150 to be rotatable within the predetermined angle range and a portion connecting the wings may prevent the actuating member 150 from escaping in the rearward direction.

A bearing shell 130 may be a bearing that allows the knob ring 120 to be smoothly manipulated. The bearing shell 130 may be provided with a cylindrical-shaped cylinder 134, and a circular plate 132 bent from the cylinder 134 to protrude in a radial direction. The cylinder 134 may be inserted between the outer circumferential surface of the actuating member 150 coupled to the knob ring 120 and an inner circumference surface of the support frame 140, and may reduce friction between the actuating member 150 and the support frame 140.

The circular plate 132 may be inserted between the front panel c and the knob ring 120 to reduce friction therebetween. The circular plate 132 may separate the knob ring 120 from the front panel c by a predetermined gap and may reduce generation of scratches on the front panel c due to the manipulation of the knob ring 120.

The knob ring 120 according to embodiments may provide a return or restoring type manipulation structure. The return type manipulation structure may be a structure that allows the knob ring 120 to be manipulated in a clockwise direction or a counterclockwise direction within a predetermined angle range due to an external force, and may return or restore the knob ring 120 to an original position thereof when the external force is released therefrom.

Restoring springs s1 and s2 may provide a restoring force which returns the knob ring 120 to the original position thereof. The restoring springs s1 and s2 may include a first restoring spring s1 configured to provide a restoring force in the clockwise direction and a second restoring spring s2 configured to provide a restoring force in the counterclockwise direction. When an external force is not applied to the knob ring 120, the elastic force of the first restoring spring s1 may balance with that of the second restoring spring s2 such that the knob ring 120 may be maintained at an initial position thereof.

Both ends of each of the restoring springs s1 and s2 may be fixed to the actuating member 150 and the support frame 140 to which the fixing frame 160 is fixed. The actuating member 150 and the knob ring 120 may integrally rotate such that the knob ring 120 may be maintained at the initial position thereof by elastic forces of the restoring springs s1 and s2, and may be rotated by a predetermined angle in the clockwise or counterclockwise direction. One or a first end of each of the restoring springs s1 and s2 may be connected to an elastic member holder 151 on the actuating member 150, and another or second end of each of the restoring springs s1 and s2 may be connected to a first spring holder 141 of the support frame 140 and a second spring holder 142 of the support frame 140, respectively.

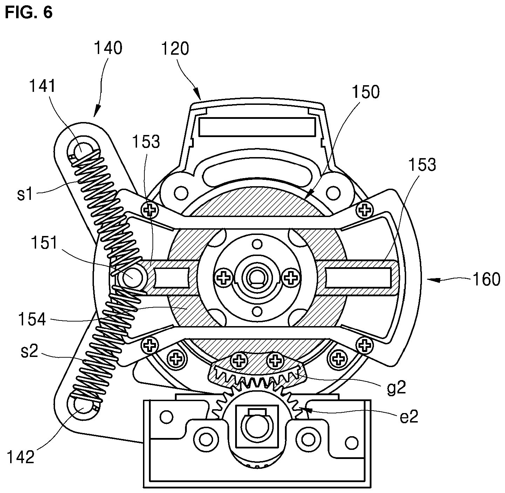

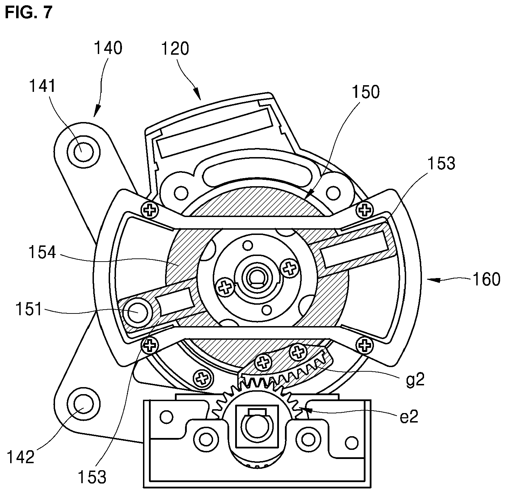

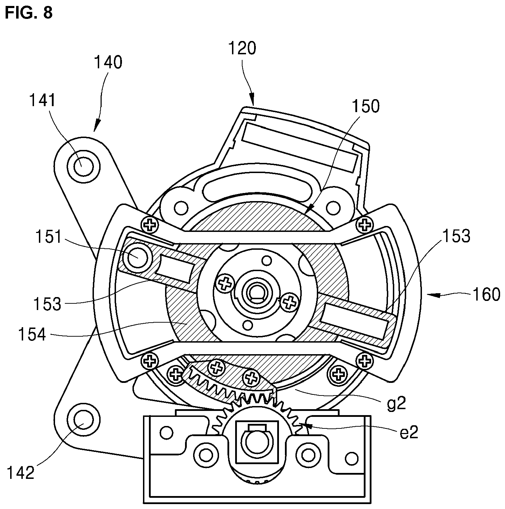

Referring to FIG. 6 through FIG. 8, for convenience of illustration, the front panel c has been omitted from the drawings. The knob handle 110 and the knob ring 120 may be coupled to a front surface side of the front panel c, and the support frame 140, the actuating member 150, and the fixing frame 160 may be coupled to a rear surface side of the front panel c.

The fixing frame 160 may be engaged with the rear surface of the front panel c, and the actuating member 150 may pass through the front panel c to be engaged with the knob ring 120. A rotational center of the actuating member 150 may be provided to coincide with an axial center of the adjustment shaft 194. The actuating member 150 may confine the axial center of the adjustment shaft 194 to be located at a predetermined position with respect to the front panel c. That is, the actuating member 150 may be fixed at the predetermined position with respect to the front panel c, and thus the adjustment shaft 194 may be fixed at an exact position with respect to the front panel c.

The actuating member 150 may be inserted into the support frame 140, may pass through the front panel c, and may partially protrude from the front panel c. A front end of the actuating member 150 may be formed in a cylindrical shape, and the cylindrical portion thereof may protrude from a front surface of the front panel c. The knob ring 120 may be coupled to the actuating member 150 that protrudes from the front surface of the front panel c. The knob ring 120 and the actuating member 150 may be coupled such that the knob ring 120 may be structurally supported by the support frame 140.

The manipulation of the knob ring 120 may be recognized based on rotation of the actuating member 150. As the knob ring 120 is a portion which is exposed to the outside of the front panel c, when an encoder configured to sense the manipulation of the knob ring 120 outside of the front panel c is provided around the knob ring 120, an exterior appearance thereof is not aesthetically pleasing. As the knob ring 120 may be integrally coupled with the actuating member 150, the knob ring encoder e2 may be provided around the actuating member 150 to sense the rotation thereof.

The knob ring gear g2 configured to transmit a rotational angle may be provided at the actuating member 150. The knob ring encoder e2 may be engaged with the knob ring gear g2 and configured to detect a rotational angle of the actuating member 150. The knob ring encoder e2 may be engaged with the knob ring gear g2 and may detect a rotational manipulation signal of the knob ring 120.

The actuating member 150 may be coupled to the pair of restoring springs s1 and s2 that return the actuating member 150 to a predetermined position. The restoring springs s1 and s2 may connect the support frame 140 to the actuating member 150. When the actuating member 150 is manipulated in the counterclockwise direction, the restoring spring s1 may provide the elastic force in the clockwise direction to return the actuating member 150 to the original position thereof. When the actuating member 150 is manipulated in the clockwise direction, the restoring spring s2 may provide the elastic force in the counterclockwise direction to return the actuating member 150 to the original position thereof.

The fixing frame 160 may be provided to prevent the actuating member 150 from escaping or moving toward the rear surface and may enable or allow the actuating member 150 to stably operate. The fixing frame 160 may prevent the actuating member 150 from escaping toward the rear surface by passing through a rear surface of the actuating member 150. The fixing frame 160 may be engaged with the support frame 140. The fixing frame 160 may confine the rotational range of the actuating member 150.

The actuating member 150 may include a actuating member body 154 and may be provided with a wing part or wing 153 that extends out to one side, and the actuating member 150 may have a structure in which the pair of restoring springs s1 and s2 are fixed to the wing 153. When a rotation range of the wing 153 is restricted by the fixing frame 160, a bidirectional rotational angle of the actuating member 150 may be constantly restricted. To more stably confine the rotation of the actuating member 150, the wing 153 may be provided at both sides of the actuating member 150, and the fixing frame 160 may equally restrict rotational ranges of the wings 153 provided at both of the sides.

The knob assembly according to embodiments may adjust a power level through manipulation of the knob handle 110 and may display a timer time through manipulation of the knob ring 120. Accordingly, the knob assembly may include the display 123 provided at the knob ring 120, the knob encoder e1 configured to detect manipulation of the knob handle 110, and the knob ring encoder e2 configured to detect manipulation of the knob ring 120.

The knob ring encoder e2 may be engaged with the knob ring gear g2 of the actuating member 150 to detect rotation of the actuating member 150. The knob ring 120 may be a returning type knob ring and may rotate within a predetermined range when an external force is applied thereto, and the knob ring 120 may return to an original position thereof when the external force is released. For example, the knob ring 120 may be manipulated to increase the timer time by being rotated a predetermined angle in the clockwise direction, and to decrease the timer time by being rotated a predetermined angle in the counterclockwise direction.

The knob handle 110 may be connected to the adjustment shaft 194 of the power level adjuster 190. The adjustment shaft 194 of the power level adjuster 190 may be a non-returning type adjustment shaft that maintains a manipulated position, and the knob encoder e1 may detect a rotational amount or a manipulated angle manipulated from a reference position. The knob encoder e1 may be engaged with the gear g1 coupled to the adjustment shaft 194 to detect rotation of the adjustment shaft 194.

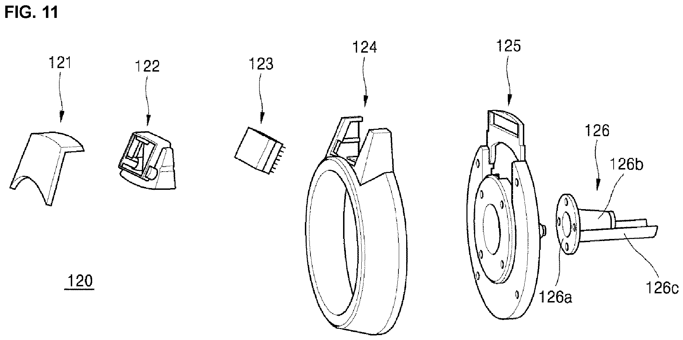

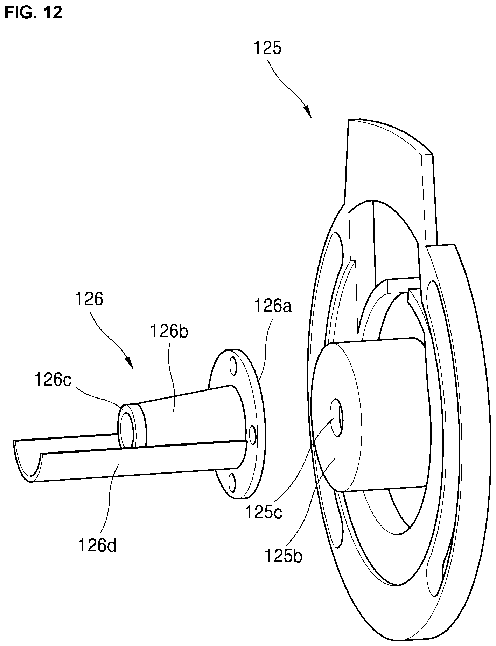

In a cooking apparatus, such as a microwave oven or an induction range, in which a power level is electronically adjusted, the power level adjuster 190 may be configured with a variable resistor, for example, so that a status of the power level adjuster 190 may be detected without separately providing the knob encoder e1. Referring to FIG. 11 and FIG. 12, the knob ring 120 may include a knob ring main body 124 configured to form an exterior appearance thereof, a rear surface plate 125 coupled to a rear surface of the knob ring main body 124, and a support pipe 126 coupled to the rear surface plate 125 and configured to support the adjustment shaft 194.

The rear surface plate 125 may be provided with a rear surface plate body and a support plate 125b configured to enter into an interior of the front panel c and protrude toward an inner side of the cooking apparatus 10. A support hole 125c configured to support the adjustment shaft 194 may be provided at or in the support plate 125b.

The support pipe 126 may be coupled to the rear surface plate 125. The support pipe 126 may be provided with a flange 126a coupled to the rear surface plate 125, a tapered pipe 126b that extends from the flange 126a, and a support rib 126d that extends longer than the tapered pipe 126b. The tapered pipe 126b may have a tapered shape in which a diameter decreases as it extends away from the flange 126a, and a support part or cap 126c configured to support the adjustment shaft 194 may be provided at a front end of the tapered pipe 126b.

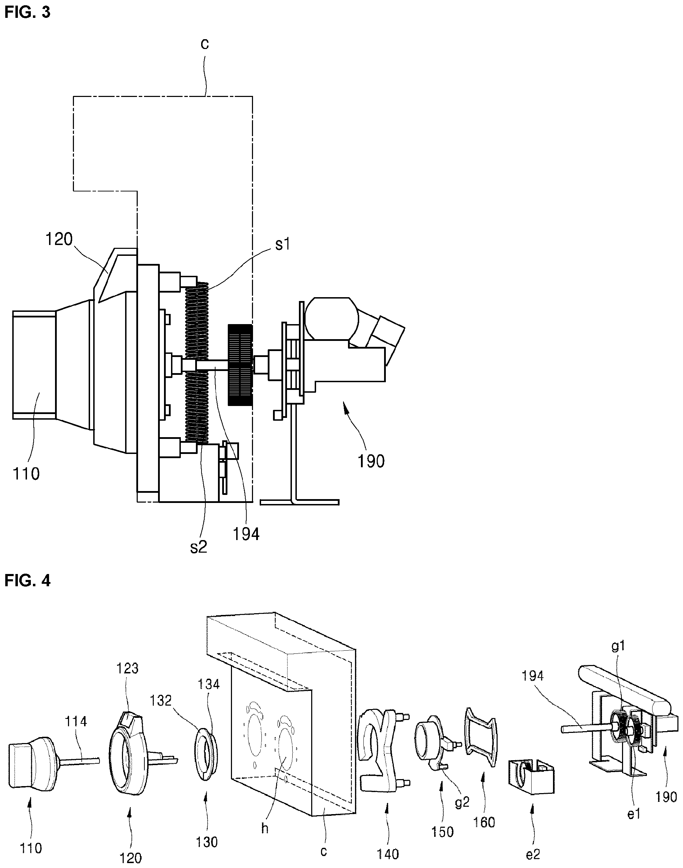

Thus, the adjustment shaft 194 may be structurally supported at two points, that is, the support hole 125c and the support cap 126c. In a related art valve structure, an adjustment shaft may be confined to a predetermined position, but as the adjustment shaft 194 may be a power level adjuster, a structure capable of stably supporting the adjustment shaft 194 may be required. The knob ring 120 may support the adjustment shaft 194 at two or more points. The knob ring 120 may support the adjustment shaft 194 at the two or more points as well as a front end of the gear g1 coupled to the adjustment shaft 194. The gear g1 (see FIG. 4) may be configured to transmit a rotational amount of the adjustment shaft 194 to the knob encoder e1, and the gear g1 may be supported on the support rib 126d.

Referring to FIG. 11, the display 123 capable of displaying the power level and timer time may be provided at the knob ring 120. The display 123 may be coupled to the knob ring main body 124 through a display housing 122, and a finishing cap 121 may be coupled to an outside of the display housing 122. The finishing cap 121 may be made of, for example, a transparent or semitransparent material to allow information displayed on the display 123 to be visible. The display 123 may be an electronic display, such as, for example, an LCD or LED device, but embodiments are not limited thereto.

Embodiments disclosed herein provide a knob assembly provided with a knob ring, which may be independently manipulated, around a knob handle so that a timer time of a cooking apparatus, such as a cooking time of a corresponding burner or an oven, may be set through a manipulation of the knob ring.

A display may be provided at the knob ring, and a power level and a timer time, for example, of a corresponding cooking apparatus may be displayed on the display so that user convenience may be improved. Further, the knob assembly according to embodiments disclosed herein may be applied to a gas range as well as a composite cooking apparatus including an oven range, an induction range, and a microwave oven, for example, so that component sharing in various cooking apparatuses may be provided.

According to embodiments disclosed herein, a knob assembly is provided that may include a knob handle coupled to an adjustment shaft that is configured to adjust power level, and a knob ring configured to surround a periphery of the knob handle, provided to pass through a front panel, configured to be rotatable independent of the knob handle, and provided with a display. The knob ring may have a returning type rotational structure in which the knob ring may return to an initial position thereof when an external force is released.

The knob assembly may further include a knob ring encoder configured to detect a manipulation of the knob ring and a knob encoder configured to detect a manipulation of the knob handle, and a power level set through a manipulation detected by the knob encoder and a timer time set through the manipulate of the knob handle may be displayed on the display.

For smooth operation of the knob handle and the knob ring, the knob assembly may further include a actuating member coupled to the knob ring, a support frame coupled to the front panel and configured to support an outer circumferential surface of the actuating member, and a fixing frame coupled to the support frame and configured to prevent the actuating member from escaping from the support frame.

The knob ring may support the adjustment shaft at two or more positions thereof. The knob ring may include a knob ring main body configured to form an exterior appearance thereof, a rear surface plate coupled to a rear surface of the knob ring main body and provided with a support hole configured to support the adjustment shaft passing through the support hole, and a support pipe coupled to the rear surface plate and configured to support the adjustment shaft. The support pipe may include a flange coupled to the rear surface plate, and a tapered pipe formed to extend from the flange and provided with a support part or support configured to support the adjustment shaft.

For reducing friction when the knob ring is manipulated, the knob assembly may further include a circular plate inserted between the knob ring and the front panel, and a bearing shell provided with a cylinder which may be inserted between the actuating member and the support frame.

Any reference in this specification to "one embodiment," "an embodiment," "example embodiment," etc., means that a particular feature, structure, or characteristic described in connection with the embodiment is included in at least one embodiment. The appearances of such phrases in various places in the specification are not necessarily all referring to the same embodiment.

## Claims

1. A cooking apparatus comprising a knob assembly, the knob assembly comprising:
a knob (110) for adjusting a power level of a power source;
a knob ring (120) surrounding the knob and rotatable independently of the knob, and
a display (123);
wherein the display is provided on the knob ring (120); and
wherein a power level detected based on a rotational amount of a manipulation of the knob (110) is displayed on the display (123), and **characterised in that** a timer time detected based on manipulation of the knob ring (120) is displayed on the display (123).

2. The cooking apparatus of claim 1, wherein the display (123) is an electronic display, an LCD or LED device.

3. The cooking apparatus of claim 1 or 2, wherein the display (123) is configured to display information of the cooking apparatus.

4. The cooking apparatus of claim 3, wherein the display (123) is configured to display a power level adjusted by the knob (110) and a timer time.

5. The cooking apparatus according to any one of the preceding claims, wherein the display (123) includes a portion for displaying a power level and a portion for displaying a timer time.

6. The cooking apparatus of any one of the preceding claims, wherein the knob assembly further comprising a knob ring encoder (e2) configured to detect the rotational amount of the manipulation of the knob ring (120).

7. The cooking apparatus according to any one of the preceding claims, wherein the knob assembly further including a knob encoder (e1) configured to detect a rotational amount of a manipulation of the knob (110).

8. The cooking apparatus according to any one of the preceding claims, wherein the display (123) is configured to display only the power level, if the timer time is not set, and wherein if the timer time is set, the display (123) is configured to display the power level for a first predetermined period of time and to display then the timer time for a subsequent second predetermined period of time.

9. The cooking apparatus according to any one of the preceding claims, wherein the display (123) is coupled to the knob ring (120) through a display housing (122), and wherein a transparent or semitransparent finishing cap (121) is coupled to an outside of the display housing (122).

10. The cooking apparatus according to any one of the preceding claims, wherein the display (123) is an electronic display including different lighting devices with different colors.

11. The cooking apparatus according to any one of the preceding claims, wherein the knob ring (120) is movable from an initial position to a second position by an external force, and the knob ring (120) is configured to return from the second position to the initial position when the external force is released, or
wherein the knob (110) includes a non-returning rotary switch which does not return to an initial position once it is rotated by an external force.

12. The cooking apparatus of any one of the preceding claims, further comprising:
a front panel (c), the knob (110) and the knob ring (120) being provided on an outside of the front panel (c);
an actuating member (150) coupled to a rear surface of the knob ring (120) to integrally rotate with the knob ring (120); and
a support frame (140) coupled to the front panel (c) to support the knob ring (120);
wherein the support frame (140) and the actuating member (150) are coupled to a rear surface side of the front panel (c) and the actuating member (150) is inserted into the support frame (140) and passes through the front panel (c) to be engaged with the knob ring (120).

13. The cooking apparatus of claim 12, further comprising a fixing frame (160) coupled to the support frame (140), the fixing frame (160) being configured to prevent the actuating member (150) from escaping from the support frame (140).

## Patentansprüche

1. Kochgerät, das eine Knebelanordnung umfasst, wobei die Knebelanordnung Folgendes umfasst:
einen Knebel (110) zum Einstellen einer Leistungsstufe einer Leistungsquelle;
einen Knebelring (120), der den Knebel umgibt und unabhängig vom Knebel gedreht werden kann, und eine Anzeige (123);
wobei die Anzeige am Knebelring (120) vorgesehen ist; und
wobei eine Leistungsstufe, die auf der Basis eines Drehbetrags einer Betätigung des Knebels (110) detektiert wird, auf der Anzeige (123) angezeigt wird, und
**dadurch gekennzeichnet, dass**
eine Zeitgeberzeit, die auf der Basis einer Betätigung des Knebelrings (120) detektiert wird, auf der Anzeige (123) angezeigt wird.

2. Kochgerät nach Anspruch 1, wobei die Anzeige (123) eine elektronische Anzeige, eine LCD- oder eine LED-Vorrichtung ist.

3. Kochgerät nach Anspruch 1 oder 2, wobei die Anzeige (123) konfiguriert ist, Informationen des Kochgeräts anzuzeigen.

4. Kochgerät nach Anspruch 3, wobei die Anzeige (123) konfiguriert ist, eine Leistungsstufe, die durch den Knebel (110) eingestellt wird, und eine Zeitgeberzeit anzuzeigen.

5. Kochgerät nach einem der vorhergehenden Ansprüche, wobei die Anzeige (123) einen Abschnitt zum Anzeigen einer Leistungsstufe und einen Abschnitt zum Anzeigen einer Zeitgeberzeit umfasst.

6. Kochgerät nach einem der vorhergehenden Ansprüche, wobei die Knebelanordnung ferner einen Knebelring-Drehgeber (e2) umfasst, der konfiguriert ist, den Drehbetrag der Betätigung des Knebelrings (120) zu detektieren.

7. Kochgerät nach einem der vorhergehenden Ansprüche, wobei die Knebelanordnung ferner einen Knebel-Drehgeber (e1) umfasst, der konfiguriert ist, einen Drehbetrag einer Betätigung des Knebels (110) zu detektieren.

8. Kochgerät nach einem der vorhergehenden Ansprüche, wobei die Anzeige (123) konfiguriert ist, dann, wenn eine Zeitgeberzeit nicht eingestellt ist, nur die Leistungsstufe anzuzeigen, und wobei die Anzeige (123) konfiguriert ist, dann, wenn die Zeitgeberzeit eingestellt ist, die Leistungsstufe für eine erste zuvor festgelegte Zeitspanne anzuzeigen und daraufhin die Zeitgeberzeit für eine nachfolgende zweite zuvor festgelegte Zeitspanne anzuzeigen.

9. Kochgerät nach einem der vorhergehenden Ansprüche, wobei die Anzeige (123) durch ein Anzeigegehäuse (122) mit dem Knebelring (120) gekoppelt ist und wobei eine lichtdurchlässige oder teilweise lichtdurchlässige Abschlusskappe (121) mit einer Außenseite des Anzeigegehäuses (122) gekoppelt ist.

10. Kochgerät nach einem der vorhergehenden Ansprüche, wobei die Anzeige (123) eine elektronische Anzeige ist, die unterschiedliche Leuchtvorrichtungen mit unterschiedlichen Farben umfasst.

11. Kochgerät nach einem der vorhergehenden Ansprüche, wobei der Knebelring (120) durch eine äußere Kraft von einer Startposition zu einer zweiten Position bewegt werden kann und wobei der Knebelring (120) konfiguriert ist, von der zweiten Position zur Startposition zurückzukehren, wenn die äußere Kraft zurückgenommen wird, oder
wobei der Knebel (110) einen nicht zurückkehrenden Drehschalter umfasst, der nicht zu einer Startposition zurückkehrt, sobald er einmal durch eine äußere Kraft gedreht worden ist.

12. Kochgerät nach einem der vorhergehenden Ansprüche, das ferner Folgendes umfasst:
eine Frontplatte (c), wobei der Knebel (110) und der Knebelring (120) an einer Außenseite der Frontplatte (c) vorgesehen sind;
ein Betätigungselement (150), das mit einer hinteren Oberfläche des Knebelrings (120) gekoppelt ist, so dass es sich mit dem Knebelring (120) einteilig dreht; und
einen Trägerrahmen (140), der mit der Frontplatte (c) gekoppelt ist, um den Knebelring (120) zu tragen;
wobei der Trägerrahmen (140) und das Betätigungselement (150) mit einer Rückseitenfläche der Frontplatte (c) gekoppelt sind und das Betätigungselement (150) in den Trägerrahmen (140) eingesetzt ist und durch die Frontplatte (c) verläuft, so dass es mit dem Knebelring (120) in Eingriff gelangt.

13. Kochgerät nach Anspruch 12, das ferner einen Fixierrahmen (160) umfasst, der mit dem Trägerrahmen (140) gekoppelt ist, wobei der Fixierrahmen (160) konfiguriert ist, zu verhindern, dass das Betätigungselement (150) den Trägerrahmen (140) verlässt.

## Revendications

1. Appareil de cuisson comportant un ensemble de bouton, l'ensemble de bouton comportant :
un bouton (110) pour régler un niveau d'énergie d'une source d'énergie ;
une bague de bouton (120) entourant le bouton et pouvant tourner indépendamment du bouton, et
un affichage (123) ;
dans lequel l'affichage est prévu sur la bague de bouton (120) ; et
dans lequel un niveau d'énergie détecté sur la base d'une quantité de rotation d'une manipulation du bouton (110) est affiché sur l'affichage (123), et
**caractérisé en ce qu'**un temps de minuterie détecté sur la base d'une manipulation de la bague de bouton (120) est affiché sur l'affichage (123).

2. Appareil de cuisson selon la revendication 1, dans lequel l'affichage (123) est un affichage électronique, un LCD ou un dispositif à LED.

3. Appareil de cuisson selon la revendication 1 ou 2, dans lequel l'affichage (123) est configuré pour afficher des informations de l'appareil de cuisson.

4. Appareil de cuisson selon la revendication 3, dans lequel l'affichage (123) est configuré pour afficher un niveau d'énergie réglé par le bouton (110) et un temps de minuterie.

5. Appareil de cuisson selon l'une quelconque des revendications précédentes, dans lequel l'affichage (123) inclut une partie destinée à afficher un niveau d'énergie et une partie destinée à afficher un temps de minuterie.

6. Appareil de cuisson selon l'une quelconque des revendications précédentes, dans lequel l'ensemble de bouton comporte en outre un codeur de bague de bouton (e2) configuré pour détecter la quantité de rotation de la manipulation de la bague de bouton (120).

7. Appareil de cuisson selon l'une quelconque des revendications précédentes, dans lequel l'ensemble de bouton inclut en outre un codeur de bouton (e1) configuré pour détecter une quantité de rotation d'une manipulation du bouton (110).

8. Appareil de cuisson selon l'une quelconque des revendications précédentes, dans lequel l'affichage (123) est configuré pour afficher uniquement le niveau d'énergie, si le temps de minuterie n'est pas réglé, et dans lequel si le temps de minuterie est réglé, l'affichage (123) est configuré pour afficher le niveau d'énergie pendant une première période de temps prédéterminée et pour afficher ensuite le temps de minuterie pendant une seconde période de temps prédéterminée subséquente.

9. Appareil de cuisson selon l'une quelconque des revendications précédentes, dans lequel l'affichage (123) est couplé à la bague de bouton (120) par l'intermédiaire d'un boîtier d'affichage (122), et dans lequel un cache de finition transparent ou semi transparent (121) est couplé à un extérieur du boîtier d'affichage (122).

10. Appareil de cuisson selon l'une quelconque des revendications précédentes, dans lequel l'affichage (123) est un affichage électronique incluant différents dispositifs d'éclairage avec différentes couleurs.

11. Appareil de cuisson selon l'une quelconque des revendications précédentes, dans lequel la bague de bouton (120) peut être amenée d'une position initiale à une seconde position par une force externe, et la bague de bouton (120) est configurée pour retourner de la seconde position à la position initiale lorsque la force externe est relâchée, ou
dans lequel le bouton (110) inclut un commutateur rotatif sans retour qui ne retourne pas à une position initiale une fois qu'il est entraîné en rotation par une force externe.

12. Appareil de cuisson selon l'une quelconque des revendications précédentes, comportant en outre :
un panneau avant (c), le bouton (110) et la bague de bouton (120) étant agencés sur un extérieur du panneau avant (c) ;
un élément d'actionnement (150) couplé à une surface arrière de la bague de bouton (120) pour tourner d'un seul tenant avec la bague de bouton (120) ; et
une armature de support (140) couplée au panneau avant (c) pour supporter la bague de bouton (120) ;
dans lequel l'armature de support (140) et l'élément d'actionnement (150) sont couplés à un côté de surface arrière du panneau avant (c) et l'élément d'actionnement (150) est inséré dans l'armature de support (140) et passe à travers le panneau avant (c) pour venir en prise avec la bague de bouton (120).

13. Appareil de cuisson selon la revendication 12, comportant en outre une armature de fixation (160) couplée à l'armature de support (140), l'armature de fixation (160) étant configurée pour empêcher l'élément d'actionnement (150) de s'échapper de l'armature de support (140).
